# EUROPÄISCHE PATENTANMELDUNG

(11) **EP 4 534 575 A1**
(43) Veröffentlichungstag der Anmeldung: **09.04.2025**
(21) Anmeldenummer: 23201507.3
(22) Anmeldetag: 04.10.2023
(51) Int. Cl.: C08G 18/10, C08G 18/48, C08G 18/76

(54) **ADDITIVE ZUR VERBESSERUNG VON HOLZVERKLEBUNGEN**

(71) Anmelder: Evonik Operations GmbH, 45128 Essen (DE)
(72) Erfinder: FELDMANN, Kai-Oliver, 45133 Essen (DE); RICHRATH, Ruben Benedikt, 45657 Recklinghausen (DE); WUNNICKE, Odo, 48161 Münster (DE); NELZ, Diandra Katharina, 48249 Dülmen (DE)
(74) Vertreter: Evonik Patent Association

(57) **Zusammenfassung**

Die Erfindung betrifft Additive für NCO-haltige Klebstoffformulierungen, NCO-haltige Klebstoffformulierungen auf Basis von Isocyanat-Präpolymeren, deren Einsatz in Klebstoffsystemen, sowie ein Verfahren zur Verklebung und die Verwendung.

## Beschreibung

### Gebiet der Erfindung

Die Erfindung betrifft Additive für Isocyanat (NCO)-haltige Klebstoffformulierungen, NCO-haltige Klebstoffformulierungen auf Basis von Isocyanat-Präpolymeren, deren Einsatz in Klebstoffsystemen, sowie ein Verfahren zur Verklebung mit Isocyanat (NCO)-haltigen Klebstoffformulierungen und die Verwendung.

### Stand der Technik

Beton ist der wichtigste Baustoff der heutigen Zeit. Die Betonherstellung stellt jedoch einen emissionsintensiven Industrieprozess dar, der zu einer beträchtlichen Treibhausgasemission führt. Der strukturelle Holzleimbau ist eine Lösung, um Emissionen von Treibhausgasen im Baubereich zu vermeiden. Produkte im strukturellen Holzleimbau wie beispielsweise OSB (oriented strand board, Grobspanplatte), CLT (cross-laminated timber, Brettsperrholz), GLT (Glulam, gluelaminated timber, Brettschichtholz), und LVL (laminated veneer lumber, Furnierschichtholz) bestehen aus Holzstoffen (z.B. Holzlamellen, Furnier, Spänen, Fasern, chemisch-modifiziertes oder infiltriertes Holz) und Klebstoffen. Klebstoffe sind z.B. pMDI, PF und MF. Für tragende Anwendungen in der EU zugelassene Klebstoffe gehören zu den Familien der Emulsionspolymer-Isocyanat(EPI)-Klebstoffe (DIN EN16254 (2016)), der Pheno- und Aminoplastharze (DIN EN 301 (2018)) oder der Polyurethan(PUR)-Klebstoffe (DIN EN 15425 (2017)) und müssen hohe Festigkeitsanforderungen erfüllen. Besonders wichtig ist, dass auch in der Hitze und im feuchten Zustand eine ausreichende Festigkeit erhalten bleibt. Ein Test zur Untersuchung des Effekts von Feuchtigkeit und Hitze auf die Festigkeit der Klebstofffuge ist die Scherzugprüfung an Buchenholzprüfkörpern im feuchten Zustand nach Kochen für 6 h, wie in DIN EN 302-1 (2017) A4 beschrieben. Von den genannten Klebstofftypen, sind besonders diejenigen mit Isocyanat-Funktionalität hervorzuheben, da diese nicht zu Formaldehydemissionen führen und bei Raumtemperatur in praktikablen Zeiten aushärten.

Eine wichtige Eigenschaft eines Klebstoffes stellt das Benetzungsverhalten dar. Als Benetzung wird die Fähigkeit von Flüssigkeiten definiert, mit Festkörpern Grenzflächen auszubilden. Die Benetzung stellt somit eine notwendige Voraussetzung für eine Klebeverbindung dar. Für die Verbesserung des Benetzungsverhaltens von nicht-wässrigen Oberflächenbeschichtungen auf Holz werden unter anderem organisch-modifizierte Siloxane eingesetzt. So beschreibt beispielsweise CN114806352 ein Öl zur Oberflächenanwendung auf Holz auf Basis von biobasierten Acrylsäureglycerinestern, welche Substratbenetzungsadditive aus der Klasse der polyether-modifizierten Siloxane enthalten können. Konkret wird BYK-346 erwähnt, welches im Technischen Datenblatt als "Silikontensid für wässrige Lacke sowie Druckfarben und Überdrucklacke mit starker Reduzierung der Oberflächenspannung und dadurch guter Verbesserung der Untergrundbenetzung" beschrieben wird und 48% Dipropylenglykolmonomethylether enthält.

Es ist bekannt, dass ein gutes Benetzungsverhalten (wetting) auch für die Festigkeit von Klebstofffugen in Holzwerkstoffen von entscheidender Bedeutung ist. Für Klebstoffe mit Isocyanat-Funktionen (NCO) sind allerdings viele, aus anderen Anwendungen bekannte Benetzungsmittel ungeeignet, da diese eine ungewollte Reaktion mit den Isocyanat-Funktionen eingehen. So reagieren z.B. die Alkoholfunktionen in BYK-346 mit den Isocyanat-Gruppen in einem typischen 1k-PUR Klebstoff auf Basis von NCO-haltigen MDI/PPG-Prepolymeren.

Derzeit existieren Normen fast ausschließlich für die Verklebung für Nadelhölzern.

Die geänderten klimatischen Bedingungen sowie die Bedrohung durch beispielsweise Borkenkäfer erfordern einen Übergang zur Verarbeitung von anderen lignozellulosischen Werkstoffen.

Aus diesem Grund werden verstärkt Laubhölzer, insbesondere Buchenholz, im strukturellen Holzleimbau verwendet.

Isocyanat-basierte Klebstoffe zeichnen sich durch ihre Vielseitigkeit aus. Durch hohe Flexibilität in der Rohstoffauswahl bei der Verarbeitung von Isocyanaten zu Polyurethan-Klebstoffen lassen sich die sehr guten Adhäsionseigenschaften der Isocyanate mit zahlreichen Eigenschaften des Polymers kombinieren. Entsprechend finden Polyurethan Klebstoffe entweder als reaktive zwei oder mehrkomponentige Produkte oder als feuchtigkeitshärtende Präpolymere Verwendung beispielsweise aufgrund ihrer leichten Verarbeitbarkeit, guten Adhäsion zu einer Vielzahl an Substraten, sowie Zähigkeit und Flexibilität des in der Klebefuge schließlich ausgehärteten Polyurethan Polymers.

Silikon-basierte Tenside haben sich als hervorragende grenzflächenaktive Substanzen in Polyurethanformulierungen bewiesen. Den häufigsten Einsatz finden sie als Schaumstabilisatoren in Isolations- oder Weichschäumen. Durch ihre Eigenschaft, sehr effizient die Grenzfläche zwischen Polymer und Luft zu belegen, die Grenzflächenspannung zu reduzieren und diese Grenzflächen dadurch zu stabilisieren, lassen sich eine Vielzahl von Polyurethanschäumen überhaupt erst herstellen. Die Eigenschaft, die Grenzflächenspannung organischer Formulierungen zu reduzieren, wird ebenfalls in der Verwendung von Silikontensiden als Benetzungshilfsmittel ausgenutzt. Beispielsweise können durch Zusatz von Silikonbasierten Tensiden zu Lacken Substrate mit niedrigen Oberflächenenergien besser benetzt werden, was zu gleichmäßigeren, defektfreieren Beschichtungen führt. Für Klebstoffanwendungen, wie beispielsweise bei der strukturellen Verklebung von Holz mittels einkomponentiger feuchtigkeitsaushärtender Klebstofffomulierungen auf Basis von Polyurethanpräpolymeren, spielt dies aufgrund der polaren Oberfläche des Holzes und der Art der Anwendung, einer erzwungenen Anwendung durch verpressen, nur eine untergeordnete Rolle. Im Gegenteil ist für den Fachmann hier eine Adhäsionsreduktion, wie sie für Silikontenside in Polyurethanformulierungen typisch ist, zu erwarten. Insbesondere nicht reaktive, d.h. solche Silikontenside, die keine gegenüber Isocyanaten reaktiven Gruppen tragen, verbleiben während der Polymerisation des Polyurethans und final ausgehärteten Material als trennender Film auf jeglicher Grenzfläche. Entsprechend lassen sich Silikontenside beispielsweise als Trennmittel in Polyurethan-Elastomeren und Mikrozellularen Polyurethanschäumen nutzen, die Adhäsion von Polyurethanhartschaum auf Metallflächen bei der Herstellung von Dämmplatten wird durch Silikontenside reduziert und Haftprobleme bei der zweilagigen Herstellung von Polyurethanschuhsohlen in Anwesenheit von Silikontensiden sind dem Fachmann bekannt.

### Aufgabe

Aufgabe war es, Benetzungsadditive für den strukturellen Holzleimbau zu finden, welche mit NCO-haltigen Klebstoffformulierungen kompatibel sind und zu einer verbesserten Festigkeit der Klebstofffuge, insbesondere nach Temperatur- und Feuchtigkeitsbelastung, führen.

### Lösung

Nummerische Bereiche, die im Format "von x bis y" angegeben sind, enthalten ebenfalls die festgelegten Werte. Werden in diesem Format mehrere bevorzugte Zahlenbereiche angegeben, so versteht es sich von selbst, dass auch alle Bereiche enthalten sind, die sich aus der Kombination der verschiedenen Endpunkte ergeben.

"Eins oder mehrere", wie hier verwendet, bezieht sich auf mindestens eine und umfasst 1, 2, 3, 4, 5, 6, 7, 8, 9 oder mehr der genannten Arten. In ähnlicher Weise bedeutet "mindestens eine" eine oder mehrere, d.h. 1, 2, 3, 4, 5, 6, 7, 8, 9 oder mehr. "Mindestens ein Diisocyanat" bedeutet beispielsweise, dass mindestens eine Art von Molekül verwendet wird, das eine Diisocyanat-Funktion besitzt, dass aber auch zwei oder mehr verschiedene Arten von Molekülen, die eine Diisocyanat-Funktion besitzen, vorhanden sein können, aber nicht, dass nur ein oder mehrere Moleküle einer Art von Molekül mit Diisocyanat-Funktion vorhanden sind.

Alle angegebenen Prozentsätze in Bezug auf die Zusammensetzungen oder Formulierungen beziehen sich auf Gew.-% bezogen auf das Gesamtgewicht der jeweiligen Zusammensetzung, sofern nicht ausdrücklich anders angegeben.

"Im Wesentlichen", wie hier verwendet, ist gleichzusetzen mit der Eingrenzung auf einen definierten Hauptteil, neben diesem ein kleinerer, ebenfalls definierter Teil vorliegen kann. "Die Modifikationen enthalten im Wesentlichen keine gegenüber Isocyanaten reaktiven Gruppen" bedeutet beispielsweise, dass gegenüber Isocyanaten reaktive Gruppen, z.B. mit einer oder mehrerer OH-Funktionalitäten, sodass bei einer Messung der OH-Zahl nach DIN EN ISO 4629-2 (2016) im Mittel von kleiner 20 mg KOH/g, bevorzugt kleiner 15 mg KOH/g und besonders bevorzugt kleiner 5 mg KOH/g gefunden werden können.

Gelöst wird die Aufgabe durch das zur Verfügung stellen von NCO-haltigen Klebstoffformulierungen auf Basis von Isocyanat-Präpolymeren für die Verklebung von lignozellulosischen Werkstoffen umfassend Additive aus der Gruppe der modifizierten Siloxane, dadurch gekennzeichnet, dass die Modifikationen im Wesentlichen keine gegenüber Isocyanaten reaktiven Gruppen enthalten und die eingesetzten Präpolymere durch Reaktion von Polyetherpolyolen und aromatischen Isocyanaten mit zwei oder mehr NCO-Funktionalitäten gebildet werden.

Beansprucht werden außerdem Additive für NCO-haltige Klebstoffformulierungen für die Verklebung von lignozellulosischen Werkstoffen umfassend modifizierte Siloxane, dadurch gekennzeichnet, dass die Modifikationen im Wesentlichen keine gegenüber Isocyanaten reaktiven Gruppen enthalten.

Überraschend war die Beobachtung, dass die Zugabe von Silikontensiden zu polyurethanbasierten Klebstoffformulierungen bei der Verklebung von Holz zur Ausbildung einer stabileren Klebefuge führt.

Die NCO-haltigen Klebstoffformulierungen für die Verklebung von lignozellulosischen Werkstoffen weisen jeweils einen NCO-Gehalt von 1-25 Gew.-%, bevorzugt einen NCO-Gehalt von 1-20 Gew.- %, besonders bevorzugt einen NCO-Gehalt von 10-20 Gew.-% auf, die nach DIN EN ISO 11909 (2007) gemessen wurde.

Hauptkomponente der NCO-haltigen Klebstoffformulierungen stellt ein Isocyanat-Präpolymer dar, welches aus mindestens einem Diisocyanat, beispielsweise einem oder mehreren Isomeren von Methandiphenyldiisocyanat, Toluoldiisocyanat, Hexamethylendiisocyanat, Isophorondiisocyanat, hydriertem Methandiphenyldiisocyanat, und/oder einem höherwertigen Isocyanat, beispielsweise polymerem Methandiphenyldiisocyanat oder Trimeren, Oligomeren oder Homopolymeren der zuvor genannten Diisocyanate und/oder deren Mischungen enthaltend zwei oder mehr der genannten Isocyanate und mindestens einer im Unterschuss eingesetzten gegenüber Isocyanaten reaktiven Substanz, meist einer Alkohol- und/oder Aminverbindung, oft in Form von Polymeren, d.h. Polyolen aus unterschiedlichen Monomeren, dargestellt wird. Formulierungen, sowie Herstellprozesse und ggf. anschließende Mischungen einzelner separat hergestellter Präpolymere sind dem Fachmann bekannt, wohl beschrieben, wie beispielsweise in WO02/48232, oder US 6133398, und bilden in weiten Teilen die Grundlagen der Polyurethanbasierten Klebstoffchemie.

Die erfindungsgemäßen modifizierten Siloxane sind ausgewählt aus der Gruppe der Derivate von Poly- oder Oligodimethylsiloxanen, bevorzugt Polyethersiloxane und insbesondere der allgemeinen Formel (I)

MₐM¹_{b}D_{c}D¹_{d}TₑQ_{f} (I)

mit 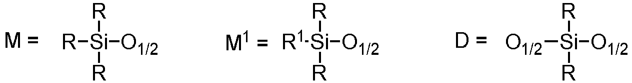 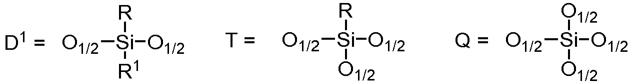
a = 0-20, bevorzugt 0-10, insbesondere 0-2,
b = 0-20, bevorzugt 0-10, insbesondere 0-2,
c = 3-200, bevorzugt 4-150, insbesondere 5-100,
d = 0-40, bevorzugt 1-30, insbesondere 1-20,
e = 0-20, bevorzugt 0-10, insbesondere 0,
f = 0-20, bevorzugt 0-10, insbesondere 0,
wobei a + b ≥ 2 sowie a + b + c + d + e + f ≥ 8 und ≤ 320, b + d ≥ 1,
R = unabhängig voneinander gleiche oder verschiedene Alkylreste mit 1-16 Kohlenstoffatomen oder Arylreste mit 6-16 Kohlenstoffatomen aufweist
oder -O-R² ist,
wobei Alkyl bevorzugt Methyl, Ethyl, Oktyl, Dodecyl, insbesondere Methyl, und Aryl bevorzugt Phenyl ist
R¹ = unabhängig voneinander gleiche oder verschiedene Polyetherreste, bevorzugt gleiche oder verschiedene Polyetherreste der allgemeinen Formel (II) ist

-[CH₂]_{g}-O-[CH₂CH₂O]ₕ-[CH₂CH(CH₃)O]ᵢ-[CH(CH₃)CH₂O]ⱼ-[CR³₂CR³₂O]ₖ-R⁴ (II)

R² = unabhängig voneinander gleiche oder verschiedene Alkylreste mit 1-16 Kohlenstoffatomen oder Arylreste mit 6-16 Kohlenstoffatomen ist,
R³ = gleiche oder verschiedene Alkylreste mit 1 bis 18 Kohlenstoffatomen, die gegebenenfalls Etherfunktionen besitzen, oder Arylreste mit 6-18 Kohlenstoffatomen, die gegebenenfalls Etherfunktionen besitzen, oder H, bevorzugt H, Methyl, Ethyl und Phenyl,
R⁴ = gleiche oder verschiedene Reste aus der Gruppe: R², H, -C(O)R², bevorzugt Methyl, Butyl oder -C(O)Me ist, wobei
g = 0-18, bevorzugt 0-10, insbesondere bevorzugt 0 und 3,
h = 0-100, bevorzugt 0-80, insbesondere bevorzugt 0-50,
i = 0-100, bevorzugt 0-80, insbesondere bevorzugt 0-50,
j = 0-100, bevorzugt 0-80, insbesondere bevorzugt 0-50,
k = 0-80, bevorzugt 0-40, insbesondere bevorzugt 0,
mit der Maßgabe h + i + j + k ≥ 3,
genügen.

Die gezeigten Strukturformeln der beschriebenen Polymere, d.h. Moleküle, die mehr als 3 gleiche Wiederholeinheiten in ihrem Aufbau aufweisen, geben durch die Indizes die Mengen der einzelnen Wiederholeinheiten im theoretischen, über die Polymerverteilung zahlengemittelten Molekül an. Die angegebenen Wiederholeinheiten können dabei in den real vorliegenden einzelnen Molekülen innerhalb der Polymerverteilung blockweise, statistisch oder in sonstiger Reihenfolge vorliegen.

Die Additive der erfindungsgemäßen NCO-haltigen Klebstoffformulierungen besitzen
1.) im Wesentlichen keine freien Alkoholfunktionen oder andere NCO-reaktive funktionelle Gruppen, und reagieren deshalb unter Lager- und Anwendungsbedingungen im Wesentlichen nicht mit den NCO-Funktionen der Klebstoffformulierung.
2.) durch die Polyetherketten außerdem eine ausreichende Mischbarkeit mit der Klebstoffformulierung.
3.) einen positiven Effekt auf Klebstoffformulierungen zur Verklebung von lignozellulosischen Werkstoffen in Bezug auf die Festigkeit der Klebstofffuge.

Im Sinne der vorliegenden Erfindung besitzen die Additive dann keine Alkoholfunktionen oder andere NCO-reaktive funktionelle Gruppen, wenn diese nicht zielgerichtet in die Molekülstruktur der modifizierten Siloxane eingebaut worden sind und nicht über Formulierungsbestandteile in nennenswerten Mengen von >10%, bevorzugt >5% besonders bevorzugt >3% beispielsweise als Lösungsmittel oder Co-Emulgator im Additiv enthalten sind. Demgegenüber können Mindermengenbestandteile wie Amine zur Einstellung des pH Wertes des Additivs vor, während oder nach der Herstellung, Antioxidationsmittel oder sonstige Bestandteile einzelner zur Herstellung der Additive benötigten Hilfsstoffe ggf. Alkoholfunktionen oder andere NCO-reaktive funktionelle Gruppen aufweisen. Ebenfalls ist es in der Praxis nicht zu vermeiden, dass eingesetzte Rohstoffe oder das Additiv selbst beispielsweise durch Alterungsprozesse, Oxidation, Zutritt von Wasser und Hydrolyse, unvollständige Reaktion beispielsweise der Endverkappungsreaktion im Herstellprozess eines als Rohstoff eingesetzten Polyethers, oder Ähnlichem in geringem Umfang NCO-reaktive funktionelle Gruppen, insbesondere Alkoholfunktionen oder Wasser im Additiv aufweisen, bzw. im Additiv nachweisbar sind bzw. im Laufe der Lagerung des Additivs in steigender Konzentration nachweisbar werden. Damit handelt es sich nach wie vor um ein Additiv, das im Wesentlichen keine Alkoholfunktionen oder andere NCO-reaktive funktionelle Gruppen aufweist.

Aus praktischer Sicht sind Additive insbesondere frei von Alkoholfunktionen oder anderen NCOreaktiven funktionelle Gruppen im Sinne der vorliegenden Erfindung, wenn eine Messung der OH Zahl nach DIN EN ISO 4629-2 (2016) ein Ergebnis von kleiner 20 mg KOH/g, bevorzugt kleiner 15 mg KOH/g und besonders bevorzugt kleiner 5 mg KOH/g ergibt.

Die NCO-haltigen Klebstoffformulierungen enthalten neben den Präpolymeren und Additiven weitere Additive oder/und Hilfsstoffe. Beispielsweise können Crosslinker, Füllstoffe, Katalysatoren, Entschäumer, Stabilisatoren, Säuren, Antioxidantien, UV Stabilisatoren, Biozide und sonstige Alterungsschutzmittel, Viskositätsmodifizierer, Weichmacher, Farbstoffe, Lösungsmittel, Dispergiermittel, Haftvermittler, Flammschutzmittel, Hydrolyseschutzmittel, Trocknungsmittel, Aktivatoren und weitere Hilfsstoffe und Mischungen daraus enthalten sein.

Bevorzugt werden die Crosslinker ausgewählt aus der Gruppe der Oligomere oder Homopolymere von Hexamethylendiisocyanat, eines oder mehrere gemischte Isomere von Methylendiphenylenyldiisocyanat, Pentamethylendiisocyanat und Isophorondiisocyanat und Mischungen daraus.

Geeignete Füllstoffe sind Metalloxide, beispielsweise Titandioxid, Aluminiumoxid, Zinkoxid, pyrogenes Siliciumdioxid, oberflächenbehandelte Kieselsäuren, Schichtsilikate wie beispielsweise Kaolin, Mica, Bentonit, oder Talk, sowie Ruß. Geeignet sind ebenfalls biobasierte Füllstoffe wie Mais-, Weizenmehl, gemahlene Nussschalen. Weiterhin bevorzugt werden die Füllstoffe ausgewählt aus der Gruppe CaCOs, verstärkende Fasern, organischen Polymeren, bevorzugt Lignin oder Cellulose und Mischungen daraus.

Zu den geeigneten Katalysatoren gehören Zinn(II)salze von Carbonsäuren, Alkylzinn(IV)carboxylate, tertiäre Amine, Aminoalkohole, Alkalimetallhydroxide und Alkalimetallalkoholate. Bevorzugte Katalysatoren der erfindungsgemäßen NCO-haltigen Klebstoffformulierungen sind ausgewählt aus der Gruppe Polycat^{®} DMDEE (Dimorpholinodiethylether) Polycat^{®} 557 (Fa. Evonik, Germany), Dialkylzinn(IV)dicarboxylate, Dialkylzinn(IV) thiole, Dialkylzinn(IV) thioglycolate und Mischungen daraus. Darüber hinaus sind eine Vielzahl weiterer Katalysatoren einsetzbar, wie beispielsweise in EP 1425328 genannt.

Geeignete Weichmacher, Lösungsmittel und Verdünner sind beispielsweise Ester, beispielsweise Ricinusöl, Diester der Phthalsäure, aliphatische Disäuren, wie beispielsweise Adipinsäure, oder Trisäuren, wie beispielsweise Zitronensäure.

Geeignete Trocknungsmittel zur Verhinderung vorzeitiger Härtung bei Feuchtigkeitseintritt während Lagerung und Vorbereitung sind beispielsweise Molekularsiebpulver, Silane, Diethylmalonat und Alkylphenolacrylate.

Hydrolyseschutzmittel sind Substanzen, die die Hydrolyse der fertig ausgehärteten Klebefuge reduzieren sollen.

Geeignete Antioxidantien und UV Stabilisatoren sind beispielsweise zu diesem Zweck vertriebene Phenolderivate, Thioester, Phosphate oder sterisch gehinderte Amine.

Geeignete Haftvermittler sind Di- oder Tri-alkoxysilane.

Geeignete Flammschutzmittel sind Brom- oder Chloralkylphosphorsäureester, Melamin, Aluminiumoxidhydrat, roter Phosphor, Ammoniumpolyphosphat, Antimontrioxid.

Geeignete Entschäumer, Hydrolyseschutzmittel Antioxidantien und Viskositätsmodifier sind dem Fachmann bekannt.

Es gibt verschiedene NCO-haltige Klebstoffsysteme, die NCO-haltige Klebstoffformulierungen enthalten. NCO-haltige Klebstoffsysteme können neben den bereits genannten Klebstoffformulierungen auch Primer enthalten. Diese werden verwendet, um die zu verklebenden Holzmaterialien vor dem Auftragen der Klebstoffzusammensetzung zu behandeln, wodurch eine Verbesserung der Haftfestigkeit, insbesondere der Nasshaftfestigkeit erreicht wird. Überraschend wurde gefunden, dass durch den Einsatz der Additive in NCO-haltigen Klebstoffformulierungen kein Primer erforderlich ist, um gute Ergebnisse in der Scherzugprüfung nach DIN EN 302-1 (2017) zu erhalten. Damit kann ein Verarbeitungsschritt bei der Verklebung von Holzmaterialien vermieden werden, was mit Einsparungen der Herstellungszeit sowie benötigten Rohstoffen einhergeht. In einigen Fällen eignet sich der zusätzliche Einsatz von Primern.

Weiterhin beansprucht werden die ausgehärteten NCO-haltigen Klebstoffformulierungen und ausgehärteten NCO-haltigen Klebstoffsysteme erhalten durch Polymerisation einer der erfindungsgemäßen NCO-haltigen Klebstoffformulierungen oder einer der erfindungsgemäßen NCO-haltigen Klebstoffsysteme.

Zur Verklebung mit NCO-haltigen Klebstoffformulierungen gibt es verschiedene Verfahren.

Beansprucht wird ein Verfahren zur Verklebung mit erfindungsgemäßen NCO-haltigen Klebstoffformulierungen enthaltend folgende Verfahrensschritte:
a) zur Verfügung stellen von mindestens zwei gleichen oder verschiedenen lignozellulosischen Werkstoffen, bevorzugt aus Hölzern, besonders bevorzugt aus Buche
b) Auftragung der NCO-haltigen Klebstoffformulierungen auf mindestens einen lignozellulosischen Werkstoff
c) Zusammenbringen der mindestens zwei lignozellulosischen Werkstoffe
d) Verpressen der mindestens zwei lignozellulosischen Werkstoffe
e) Optionale Nachhärtung der verklebten lignozellulosischen Werkstoffe durch Lagerung

Für den Verfahrensschritt b) können Klebstoffmengen von 90-350 g/m², bevorzugt 120-250 g/m², besonders bevorzugt 140-200 g/m² verwendet werden.

Die Verfahrensschritte c) und d) können gegebenenfalls unter erhöhter Temperatur und in der Regel unter erhöhtem Druck durchgeführt werden, um eine schnell aushärtende und feste Klebefuge zu erreichen.

Für den Verfahrensschritt c) kann ein Druck von 0,4-2 N/mm², bevorzugt 0,6-1,4 N/mm² für die Flächen- und Schmalseitenverklebung sowie 5-15 N/mm², bevorzugt 7,5-10 N/mm² für die Keilverzinkung verwendet werden.

Für den Verfahrensschritt c) kann eine Temperatur von 0-210°C, bevorzugt 15-40°C verwendet werden, beispielsweise durch beheizte Umgebungsatmosphäre oder temperierte Pressen. Weiterhin beansprucht wird die Verwendung der erfindungsgemäßen NCO-haltigen Klebstoffformulierungen zur Verklebung von lignozellulosischen Werkstoffen.

Insbesondere wird die Verwendung der erfindungsgemäßen NCO-haltigen Klebstoffformulierungen zur Verklebung von Nadelhölzern, Gräsern und Laubhölzern beansprucht.

Besonders bevorzugt wird hierbei die Verklebung von Bambus, Miscanthus, Getreidestroh und Hanfschäben.

Ganz besonders bevorzugt ist die Verklebung von Buchenhölzern, Birkenhölzern, Eichenhölzern, Eucalyptus, Douglasie, Lärche, acetyliertem Holz.

Ebenso wird die Verwendung der erfindungsgemäßen NCO-haltigen Klebstoffformulierungen zur Verklebung von Schnitthölzern, Fasern, Schnitzel, Brettern, Holzspreissel, Furnier und Spänen beansprucht.

Die erhaltenen verklebten lignozellulosischen Werkstoffe sind Produkte, die in verschiedenen Produktgruppen Verwendung finden. Beispielsweise finden sie Verwendung in Parkett,

Brettsperrholz, Brettschichtholz, Furnierschichtholz, Massivholzplatten, Furniersperrholz, I-Joist, Doppelstegträgern, Scrimber-Produkte.

Für die Verwendung der NCO-haltigen Klebstoffformulierungen gibt es ein breites Anwendungsgebiet. In verschiedenen Anwendungsmärkten kommen verklebte lignozellulosische Werkstoffe zum Einsatz. Beispielsweise im Möbelbau, strukturellem Holzleimbau, Fahrzeugen, Fassaden.

Es wurde gefunden, dass die NCO-haltigen Klebstoffformulierungen auch für die Verklebung von lignozellulosischen Werkstoffen mit anderen Werkstoffen, beispielsweise Metall, Kunststoffen, insbesondere mit Schaummaterialien, Keramik, Glas geeignet sind.

### Beispiele

### Bedingungen für die Herstellung der Prüfkörper:

Die Herstellung der verklebten lignozellulosischen Werkstoffe erfolgte in Anlehnung an die Norm DIN EN 302-1 (2017). Es wurden nicht-gedämpfte Buchenholzbretter verwendet, wobei diese eine der DIN entsprechenden Rohdichte, Holzfeuchte, Länge, Dicke und Breite aufwiesen.

### Prüfkörpervorbereitung:

Bei einer Temperatur von 18-22°C und einer relativen Luftfeuchtigkeit von 60-70% wurden die Buchenholzbretter-Prüfkörper mindestens eine Woche im Klimaschrank bereitgestellt.

Für die Herstellung der bis zu 5 Holzprüfkörper wurden zwei Buchenholzbretter verklebt. Für die Referenz wurde eine Klebstoffmenge von 200 g/m² des 1K-Polyurethanklebstoffs LOCTITE^{®} HB S309 PURBOND der Firma Henkel AG & Co. KgaA verwendet. Für die Austestung des Additivs wurde eine Klebstoffformulierung aus 1% Polyethersiloxan und 99% LOCTITE^{®} HB S309 PURBOND der Firma Henkel AG & Co. KgaA mit der Klebstoffformulierungsmenge von 200 g/m² benutzt.

Nach Auftragen der erfindungsgemäßen NCO-haltigen Klebstoffformulierung wurden die Holzprüfkörper übereinandergelegt und leicht angedrückt. Für die Referenz wurde eine Klebstoffformulierung ohne Polyethersiloxan-Additiv verwendet.

Anschließend erfolgte die Verpressung mittels hydraulischer Presse bei einem Pressdruck von 1,2-1,3 N/mm² für 75 Minuten und 20-30°C Raumtemperatur, wonach die verklebten Werkstoffe für 7-14 Tage bei Normalklima gelagert wurden. Das Zuschneiden der Probekörper erfolgte mit einer CNC-Fräse, wobei gemäß Norm zwei versetzte Ausfräsungen quer zur Holzfaser durchgeführt wurden. Außerdem wurden die beiden Außenbereiche parallel zur Faserrichtung im Abstand von 7,5 mm zu den Kanten weg gefräst und verworfen.

### Nachbehandlungen A1 und A4:

Für die Beispiele 2 und 4 wurden die Holzprüfkörper in Anlehnung an die in DIN EN 302-1 (2017) beschriebene Nachbehandlung A4 behandelt.

Für Proben in Anlehnung an A4 wurden die Proben zunächst 6 Stunden in Wasser gekocht und anschließend, abweichend von der Norm über Nacht, statt nur für zwei Stunden, in kaltes Wasser eingelegt und in der Längszugscherprüfung feucht vermessen. Für eine Nachbehandlung in Anlehnung an A1 erfolgten keine weiteren Schritte nach der 1 - 2 wöchigen Lagerung bei Normalklima.

### Durchführung der Längszugscherprüfung:

Die Prüfkörper wurden parallel zur Belastungsrichtung in die Einspannbacken der Zugprüfmaschine mit einem Abstand von 90 mm eingespannt und mit dem in der Norm DIN 302-1 (2017) angegebenen Belastungsanstieg von 2,0 [±0,5] kN/min getestet. Die Prüfung galt mit dem Bruch des Prüfkörpers als beendet. Prüfkörper, welche stark verdreht waren und welche nicht in die Backen eingespannt werden konnten, ohne eine Spannung quer zur Faserrichtung in der Klebstofffuge zu erzeugen, wurden nicht zur Berechnung des Mittelwerts herangezogen. Solche Prüfkörper delaminieren häufig bereits vor der Längszugscherprüfung während des Einspannens in die Einspannbacken.

### Bestimmung des Holzausrisses:

Der Holzausriss wird nach erfolgter Längszugscherprüfung jeweils durch Analyse beider Prüfkörperfragmente mit einem VR-5000 optischen 3D-Profilometerder Marke Keyence bestimmt. Dabei werden Erhebungen oder Vertiefungen, die höher bzw. tiefer als 0,1 mm sind als Holzausriss gewertet. Der in der Tabelle angegebene Holzausriss ist der Mittelwert aller Holzausrisse.

### Herstellung der Additive:

Die Additive A und B wurden durch die, dem Fachmann bekannte, Hydrosilylierungs-Reaktionen von Monoallylmonoalkylpolyethern mit Wasserstoffsiloxanen synthetisiert (siehe beispielsweise DE 10 2014 218 635 A1, EP 0 493 836 A1, EP 1520 870 B1). Additiv A genügt der Formel I mit a = 0, b = 2, c = 35, d = 3, e = 0, f = 0, R = Methyl und R¹ einem Polyetherrest mit g = 3, h = 15, i + j = 4, k = 0 und R⁴ = Methyl und Additiv B mit a = 0, b = 2, c = 35, d = 3, e = 0, f = 0, R = Methyl und R¹ einem Polyetherrest mit g = 3, h = 14, i = 0, j = 0, k = 0 und R⁴ = Methyl. Für beide Additive wurde gemäß DIN EN ISO 4629-2 (2016) eine OH-Zahl von 3 mg KOH/g bestimmt.

| | | **Nachbehandlung in Anlehnung an DIN EN 302-1 (2017)** | **Mittelwert Längszugscherfestigkeit [N/mm2]** | **Mittwelwert Holzausriss [%]** | **Anzahl der Prüfkörper für Mittelwert** |
|---|---|---|---|---|---|
| Referenz 1 | ohne Additiv | A1 | 12,2 | 41 | 18 |
| Referenz 2 | ohne Additiv | A4 | 4,8 | 62 | 14 |
| Beispiel 1 | Additiv A | A1 | 11,9 | 89 | 10 |
| Beispiel 2 | Additiv A | A4 | 6,3 | 49 | 10 |
| Beispiel 3 | Additiv B | A1 | 12,8 | 53 | 10 |
| Beispiel 4 | Additiv B | A4 | 7,1 | 71 | 5 |

Beispiele 1 und 3 zeigen, dass sich die Längszugscherfestigkeiten der Prüfkörper mit den erfindungsgemäßen NCO-haltigen Klebstoffformulierungen im trockenen Zustand gegenüber der Referenz 1 ohne Additiv nicht stark verändern. Werden die verklebten Prüfkörper in Anlehnung an DIN EN 302-1 (2017) A4 nachbehandelt, dann zeigt sich, dass die Längszugscherfestigkeiten der Prüfkörper mit den NCO-haltigen Klebstoffformulierungen enthaltend Additive (Beispiele 2 und 4) gegenüber der Referenz 2 wesentlich verbessert werden konnten.

Ein weiteres Kriterium ist der Holzausriss. Der Holzausriss wird als ein weiteres Maß für die Festigkeit der Klebstofffuge betrachtet. Hohe Holzausrissanteile, idealerweise von 100%, gelten dabei als besonders vorteilhaft. Die Versuche zeigen, dass die erfindungsgemäßen NCO-haltigen Klebstoffformulierungen den Holzausriss unter den Bedingungen nach DIN EN 302-1 (2017) A1 verbessern.

## Patentansprüche

1. Additive für NCO-haltige Klebstoffformulierungen für die Verklebung von lignozellulosischen Werkstoffen umfassend modifizierte Siloxane, **dadurch gekennzeichnet, dass** die Modifikationen im Wesentlichen keine gegenüber Isocyanaten reaktiven Gruppen enthalten.

2. NCO-haltige Klebstoffformulierungen auf Basis von Isocyanat-Präpolymeren für die Verklebung von lignozellulosischen Werkstoffen umfassend Additive gemäß Anspruch 1 aus der Gruppe der modifizierten Siloxane, **dadurch gekennzeichnet, dass** die Modifikationen im Wesentlichen keine gegenüber Isocyanaten reaktiven Gruppen enthalten und die eingesetzten Präpolymere durch Reaktion von Polyetherpolyolen und aromatischen Isocyanate mit zwei oder mehr NCO-Funktionalitäten gebildet werden.

3. NCO-haltige Klebstoffformulierungen gemäß Anspruch 2, wobei die Klebstoffformulierung einen NCO-Gehalt von 1-25 Gew.-%, bevorzugt einen NCO-Gehalt von 1-20 Gew.-%, besonders bevorzugt einen NCO-Gehalt von 10-20 Gew.-% aufweist.

4. NCO-haltige Klebstoffformulierungen gemäß Anspruch 2-3, **dadurch gekennzeichnet, dass** die modifizierten Siloxane ausgewählt sind aus der Gruppe der Polyethersiloxane und insbesondere der allgemeinen Formel (I)
MₐM¹_{b}D_{c}D¹_{d}TₑQ_{f} (I)
mit 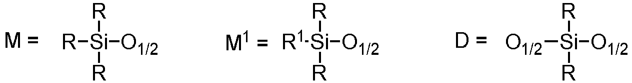 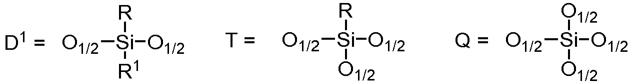
a = 0-20, bevorzugt 0-10, insbesondere 0-2,
b = 0-20, bevorzugt 0-10, insbesondere 0-2,
c = 3-200, bevorzugt 4-150, insbesondere 5-100,
d = 0-40, bevorzugt 1-30, insbesondere 1-20,
e = 0-20, bevorzugt 0-10, insbesondere 0,
f = 0-20, bevorzugt 0-10, insbesondere 0,
wobei a + b ≥ 2 sowie a + b + c + d + e + f ≥ 8 und ≤ 320, b + d ≥ 1,
R = unabhängig voneinander gleiche oder verschiedene Alkylreste mit 1-16 Kohlenstoffatomen oder Arylreste mit 6-16 Kohlenstoffatomen aufweist oder -O-R² ist,
wobei Alkyl bevorzugt Methyl, Ethyl, Oktyl, Dodecyl, insbesondere Methyl, und Aryl bevorzugt Phenyl ist
R¹ = unabhängig voneinander gleiche oder verschiedene Polyetherreste, bevorzugt gleiche oder verschiedene Polyetherreste der allgemeinen Formel (II) aufweist
-[CH₂]_{g}-O-[CH₂CH₂O]ₕ-[CH₂CH(CH₃)O]ᵢ-[CH(CH₃)CH₂O]ⱼ-[CR³₂CR³₂O]ₖ-R⁴ (II)
R² = unabhängig voneinander gleiche oder verschiedene Alkylreste mit 1-16 Kohlenstoffatomen oder Arylreste mit 6-16 Kohlenstoffatomen aufweist,
R³ = gleiche oder verschiedene Alkylreste mit 1 bis 18 Kohlenstoffatomen, die gegebenenfalls Etherfunktionen besitzen, oder Arylreste mit 6-18 Kohlenstoffatomen, die gegebenenfalls Etherfunktionen besitzen, oder H, bevorzugt H, Methyl, Ethyl und Phenyl,
R⁴ = gleiche oder verschiedene Reste aus der Gruppe: R², H, -C(O)R², bevorzugt Methyl, Butyl oder -C(O)Me ist, wobei
g = 0-18, bevorzugt 0-10, insbesondere bevorzugt 0 und 3,
h = 0-100, bevorzugt 0-80, insbesondere bevorzugt 0-50,
i = 0-100, bevorzugt 0-80, insbesondere bevorzugt 0-50,
j = 0-100, bevorzugt 0-80, insbesondere bevorzugt 0-50,
k = 0-80, bevorzugt 0-40, insbesondere bevorzugt 0,
mit der Maßgabe h + i + j + k ≥ 3,
genügen.

5. NCO-haltige Klebstoffformulierungen gemäß Anspruch 2-4, umfassend Crosslinker, Füllstoffe, Katalysatoren, Stabilisatoren, Entschäumer, Antioxidantien, Viskositätsmodifizierer, Aktivatoren, weitere Hilfsstoffe und Mischungen daraus.

6. NCO-haltige Klebstoffformulierungen gemäß Anspruch 2-5, wobei die Crosslinker ausgewählt sind aus der Gruppe der Oligomere und Homopolymere von Hexamethylendiisocyanat, Pentamethylendiisocyanat und Isophorondiisocyanat und Mischungen daraus.

7. NCO-haltige Klebstoffformulierungen gemäß Anspruch 2-6, wobei die Füllstoffe ausgewählt sind aus der Gruppe CaCOs, verstärkenden Fasern, Kaolin, organischen Polymeren beispielsweise Lignin oder Cellulose, und Mischungen daraus.

8. NCO-haltige Klebstoffformulierungen gemäß Anspruch 2-7, wobei geeignete Katalysatoren ausgewählt sind aus Zinnsalze von Carbonsäuren, tertiäre Amine, Aminoalkohole, Alkalimetallhydroxide und Alkalimetallalkoholate und Mischungen daraus; bevorzugt Dimorpholinodiethylethern, Dialkylzinn(IV)dicarboxylate, Dialkylzinn(IV) thiole, Dialkylzinn(IV) thioglycolate und Mischungen daraus.

9. NCO-haltige Klebstoffsysteme enthaltend Klebstoffformulierungen gemäß einem der Ansprüche 1-8, wobei ein Primer enthalten sein kann.

10. Ausgehärtete NCO-haltige Klebstoffformulierungen oder ausgehärtetes NCO-haltiges Klebstoffsystem erhalten durch Polymerisation einer der NCO-haltigen Klebstoffformulierungen gemäß einem der Ansprüche 2-8 oder einer der NCO-haltigen Klebstoffsysteme gemäß Anspruch 9.

11. Verfahren zur Verklebung mit NCO-haltigen Klebstoffformulierungen gemäß Anspruch 1-8, oder NCO-haltigen Klebstoffsystemen gemäß Anspruch 9,**dadurch gekennzeichnet**
a) zur Verfügung stellen von mindestens zwei gleichen oder verschiedenen lignozellulosischen Werkstoffen
b) Optionales Auftragen eines Primers
c) Auftragung der NCO-haltigen Klebstoffformulierungen auf mindestens einen lignozellulosischen Werkstoff
d) Zusammenbringen der mindestens zwei lignozellulosischen Werkstoffe
e) Verpressen der lignozellulosischen Werkstoffe
f) Optionale Nachhärtung der verklebten lignozellulosischen Werkstoffe durch Lagerung.

12. Verwendung der NCO-haltigen Klebstoffformulierungen gemäß einem der Ansprüche 1-8 oder der NCO-haltigen Klebstoffsysteme gemäß Anspruch 9 zur Verklebung von lignozellulosischen Werkstoffen.

13. Verwendung der NCO-haltigen Klebstoffformulierungen oder NCO-haltigen Klebstoffsystemen gemäß Anspruch 12 zur Verklebung von Nadelhölzern, Gräsern, Laubhölzern, Buchenhölzern, Birkenhölzern, Eichenhölzern, Eucalyptus, Douglasie, Lärche, acetyliertem Holz, Bambus, Miscanthus, Getreidestroh und Hanfschäben.

14. Verwendung der NCO-haltigen Klebstoffformulierungen oder NCO-haltigen Klebstoffsystemen gemäß Anspruch 12 in Verklebungen von Schnitthölzern, Fasern, Schnitzel, Brettern, Holzspreissel, Furnier, Parkett, Brettsperrholz, Brettschichtholz, Furnierschichtholz, Massivholzplatten, Furniersperrholz, I-Joist, Doppelstegträgern, Scrimbern und Spänen.

15. Verwendung der NCO-haltigen Klebstoffformulierungen oder NCO-haltigen Klebstoffsystemen gemäß Anspruch 12 im Möbelbau, strukturellem Holzleimbau, Fahrzeugen, Fassaden.
